(19) Europäisches Patentamt

European Patent Office

Office européen des brevets

(11) **EP 1 487 165 A1**

(12) **EUROPEAN PATENT APPLICATION**

(43) Date of publication:
**15.12.2004 Bulletin 2004/51**

(51) Int Cl.7: **H04L 25/02**

(21) Application number: **04013649.1**

(22) Date of filing: **09.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **14.06.2003 KR 2003038546**

(71) Applicant: **LG ELECTRONICS INC.**
**Seoul (KR)**

(72) Inventor: **Chang, Seok Il**
**Gyunggi-Do (KR)**

(74) Representative: **von Hellfeld, Axel, Dr. Dipl.-Phys.**
**Wuesthoff & Wuesthoff**
**Patent- und Rechtsanwälte**
**Schweigerstrasse 2**
**81541 München (DE)**

(54) **TD-SCDMA channel estimation method and apparatus**

(57) A channel estimation method and apparatus are provided in a Time Division Synchronous Code Division Multiple Access (TD-SCDMA) system. When signals are received from channel paths (M1,M2,M3) of each user, channel impulse responses of each user are estimated by using a single cyclic correlation on as many as a number of channel taps corresponding to a guard period. An estimate value of a tap corresponding to a midamble offset (W) may be masked. Thus, even a channel path that has been further delayed than the midamble offset (W) may be estimated and a channel estimation performance may be enhanced.

**EP 1 487 165 A1**

**Description**

**BACKGROUND OF THE INVENTION**

**1. Field of the Invention**

Embodiments of the present invention may relate to a channel estimation method and apparatus in a Time Division Synchronous Code Division Multiple Access (TD-SCDMA) system.

**2. Background of Related Art**

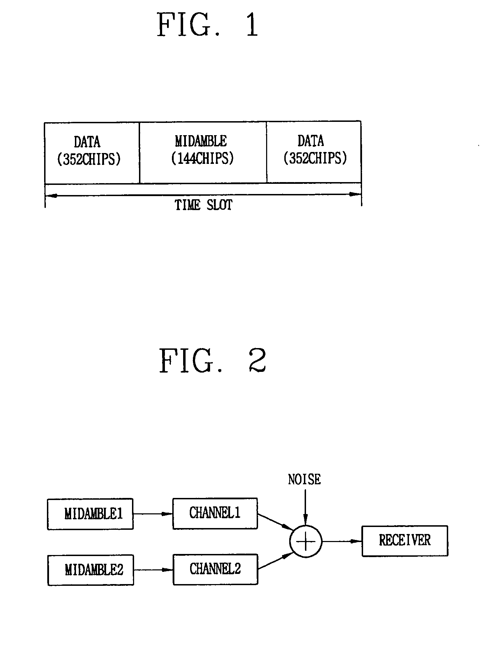

TD-SCDMA system is one of the third-generation mobile communication technique standards recognized by an International Telecommunication Union (ITU), along with Wideband CDMA: asynchronous type (W-CDMA) and CDMA-2000 (synchronous type). TD-SCDMA adopts advantages of TDMA (Time Division Multiple Access) and CDMA (Code Division Multiple Access). That is, TD-SCDMA combines the European digital mobile communication (GSM) and the North American digital mobile communication (CDMA).
One radio frame used in 3G TD-SCDMA may include two sub-frames in which one sub-frame includes a plurality of times slots. Figure 1 shows an example arrangement in which a time slot includes two data fields and a midamble field positioned therebetween. Each data field may be 352 chips and the midamble field may be 144 chips. A midamble sequence of the midamble field is provided between a transmitting unit and a receiving unit. A guard period may also be provided between the plurality of time slots and may have 16 chips.
When a time slot including the midamble sequence is transmitted from a transmitting unit to a receiving unit of a TD-SCDMA system, the receiving unit may perform a channel estimation by using a single cyclic correlation based on the midamble sequence.
Each midamble sequence allocated to each code (i.e., to each user) may be a sequence in which a basic midamble sequence has been shifted as much as a midamble offset. The midamble offset may vary depending on the number of users, and a maximum number of channel taps in the channel estimation may be determined based on the midamble offset.
Accordingly, in a channel estimation method of a TD-SCDMA system, since the maximum number of channel taps may be limited by the midamble offset, if there is a channel path range of the midamble offset (i.e., if there is a channel path delayed more than the midamble offset), it may not be possible to decode the channel path beyond the range of the midamble offset. Thus, since signals of more channels paths for a specific user channel cannot be restored, decoding performance may deteriorate.

**SUMMARY OF THE INVENTION**

Embodiments of the present invention may provide a channel estimation method and apparatus in a TD-SCDMA system that is capable of increasing a number of channel taps that can be estimated. This may be done by adopting a masking technique during channel estimation using a single cyclic correlation.
Embodiments of the present invention may enhance performance of a receiver by estimating a channel path beyond a range of a midamble offset by mitigating a number of channel taps that can be estimated.
A channel estimation method may be provided that includes estimating channel paths as long as a guard period by using a midamble sequence. This may also include masking a channel path corresponding to a midamble offset among the estimated channel paths and decoding signals transmitted through the estimated channel paths.
Channel path estimation may be performed by using a single cyclic correlator. The guard period may be 16 chips, for example. The midamble offset may indicate a maximum integer not more than a resulting value obtained by dividing a number of chips of the midamble sequence by a number of users.
A channel estimation apparatus may be provided in a TD-SCDMA system that includes a first device to estimate paths of a channel as long as a guard period by using a midamble sequence and a second device to mask a path of the channel corresponding a midamble offset from among the estimated channel paths.
The channel estimation apparatus may further include a channel decoder to decode signals transmitted through the estimated channel paths.
Channel path estimation may be performed using a single cyclic correlator. The guard period may be 16 chips, for example. The midamble offset may indicate a maximum integer not more than a resulting value obtained by dividing a number of chips of the midamble sequence by a number of users.
Additional advantages, objects, features and embodiments of the invention may be set forth in part in the description that follows and in part may become apparent to those having ordinary skill in the art upon examination of the following or may be learned from practice of the invention.

## BRIEF DESCRIPTION OF THE DRAWINGS

The following represents brief descriptions of the drawings in which like reference numerals represent like elements and wherein:

Figure 1 illustrates a structure of a time slot used in a TD-SCDMA system according to an example arrangement;
Figure 2 illustrates an operation that midambles allocated to each code are received by a receiver (or receiver unit) through corresponding channels in a TD-SCDMA system according to an example arrangement;
Figure 3A illustrates allocation of a midamble sequence to each user after being shifted by as much as a midamble offset;
Figure 3B is a graph showing a channel impulse response having channel taps during the midamble offsets;
Figure 4 is a flow chart of a channel estimation method in a TD-SCDMA system in accordance with an example embodiment of the present invention;
Figure 5A illustrates allocation of a midamble sequence to each user after being shifted by as much as a midamble offset; and
Figure 5B is a graph showing a channel impulse response having the channel taps as long as a guard period in accordance with an example embodiment of the present invention.

## DETAILED DESCRIPTION OF PREFERRED EMBODIMENTS

In a TD-SCDMA system, a basic midamble sequence (mp) may be expressed by the following Equation (1):

$$m_P=(m_1, m_2, ..., m_P) \qquad \qquad \text{Equation (1)}$$

The number of elements of the basic midamble sequence may be set as 128 (described in 3GPP TS 25.331 Annex A). Accordingly, the value P in Equation (1) may be 128.

When Quadrature Phase Shift Keying (QPSK) modulation is used, a binary basic midamble sequence ($\underline{m}_P$) may be converted into a complex number form as shown by the following Equation (2):

$$\underline{m}_P=(\underline{m}_1, \underline{m}_2, ..., \underline{m}_P) \quad \underline{m}_i=(j)^i \cdot m_i \qquad \text{for all } i=1,...,P \qquad \text{Equation (2)}$$

In order to obtain a training sequence (i.e., a midamble sequence allocated to each user) to be allocated to each code, the binary basic midamble sequence ($\underline{m}_P$) may be periodically extended to a size expressed in the following Equation (3):

$$i_{max}=L_m+(K-1)W \qquad \qquad \text{Equation (3)}$$

wherein $L_m$ is 144, K is the number of users, and W indicates a midamble offset. Thus, an extended sequence can be expressed by the following Equation (4):

$$\underline{m}=(\underline{m}_1, \underline{m}_2, ..., \underline{m}_{i\ max})=(\underline{m}_1, \underline{m}_2, ..., \underline{m}_{Lm+(K-1)W}) \qquad \text{Equation (4)}$$

$m^{(k)}$ sequence of the kth user can be expressed by the following Equation (5) using the extended sequence:

$$\underline{m}^{(k)}=(\underline{m}_1^{(k)}, \underline{m}_2^{(k)}, ..., \underline{m}_{L_m}^{(k)}) \qquad \qquad \text{Equation (5)}$$

The number of elements of the $\underline{m}^{(k)}$ sequence may be 144.

Each element $\underline{m}_i^{(k)}$ of the $\underline{m}^{(k)}$ sequence can be obtained by the following Equation (6) using sequence $\underline{m}$:

$$\underline{m}_i^{(k)} = \underline{m}_{i+(K-k)W} \qquad \qquad \text{Equation (6)}$$

wherein the number of users K and the midamble offset W may be determined by the following Equation (7):

$$K=2,4,6,8,10,12,14,16, \quad W=\left\lfloor \frac{P}{K} \right\rfloor, P=128 \qquad \text{------------ Equation (7)}$$

wherein the maximum number of users is set as 16, P is 128 and W indicates a maximum integer not more than a result value obtained by dividing P by K.

A least square algorithm (LS) algorithm is one of the channel estimation methods having a best performance. In a TD-SCDMA system, a maximum CDMA channel can be used, which means that a number of users can be set at a maximum of 16. In addition, the number of spreading factors may be 16.

Figure 2 shows an example of two of the 16 channels being received by a receiver (or receiver unit) according to an example arrangement. Other arrangements are also possible.

When a signal containing the midamble is received by the receiver, the receiving signal 'y' may be expressed by the following Equation (8):

$$y=Mh+c \qquad\qquad\qquad \text{Equation (8)}$$

wherein h indicates a complex number channel impulse response and is expressed as $[h_{L,1},h_{L,2}]^T$, and c indicates a noise sample introduced from outside.

Impulse responses of each channel (i.e., two channels in Figure 2) can be expressed by the following Equation (9):

$$h_{L,n}= \lfloor h_{0,n},h_{1,n},..., h_{L,n} \rfloor, n=1,2 \qquad\qquad \text{Equation (9)}$$

wherein n indicates the number of channels and L indicates a number of chips (16 chips) of the guard period.

$$M_n= \begin{bmatrix} m_{L,n} & \cdots & m_{1,n} & m_{0,n} \\ m_{L+1,n} & \cdots & m_{2,n} & m_{1,n} \\ \vdots & \vdots & \vdots & \vdots \\ m_{L+P-1,n} & \cdots & m_{P,n} & m_{P-1,n} \end{bmatrix} \qquad \text{------------------} \qquad \text{Equation (10)}$$

When a midamble sequence matrix of each channel is defined by the above Equation (10), the matrix M can be expressed by the following Equation (11):

$$M=[M_1 \ M_2] \qquad\qquad\qquad \text{Equation (11)}$$

wherein P indicates a period of a basic midamble sequence (i.e., the number of elements), and L indicates a number of chips of the guard period.

Since an LS algorithm searches a channel impulse response minimizing a square of an error in every channel, an estimated channel impulse response may be expressed by the following Equation (12) using the LS algorithm:

$$\hat{h} = \arg\min_{h}\|c\|^2 = \arg\min_{h}\|y - Mh\|^2 = (M^H M)^{-1} M^H y \qquad \text{---------- Equation (12)}$$

The basic midamble sequence may have a good periodic autocorrelation. Thus, $M^H M$ that can be a correlation matrix in the LS algorithm may have a form close to a diagonal matrix. A simple channel estimation may be made from the LS algorithm.

If the correlation matrix $M^H M$ is a diagonal matrix, an estimated channel impulse response may be simplified by following Equation (13):

$$\hat{h} = \frac{1}{P} M^H y \qquad\qquad \text{Equation (13)}$$

The midamble sequence that has been shifted as long as the midamble offset W may be allocated to each user.

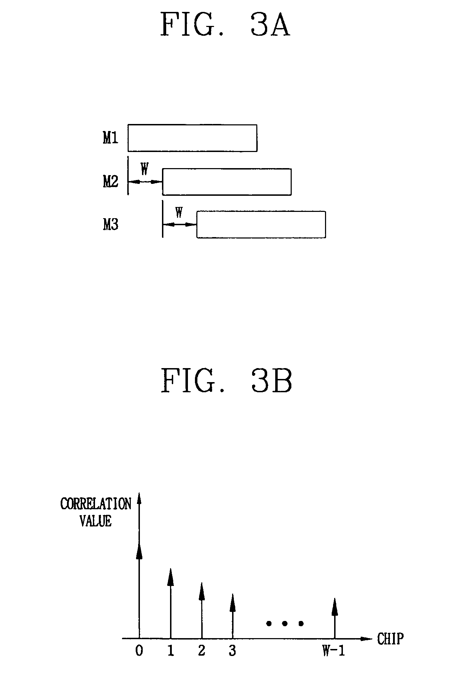

Figure 3A shows an allocation of a midamble sequence to each user after being shifted at least as much as a midamble offset W. The midamble offset W may vary depending on a number of users as set forth above in Equation (7).

When signals containing the midamble allocated to each user are transmitted from a transmitter (or transmitter unit), the receiver may estimate channels of each user by using a single cyclic correlation. That is, the receiver may perform a periodic correlation between the received signal and the allocated midamble sequence to obtain a correlation value and thereby obtain a channel impulse response.

Figure 3B is a graph showing a channel impulse response having channel taps during midamble offsets according to an example arrangement. Other graphs and arrangements are also possible. As shown, there is a difference of as much as W sequentially between the midamble sequences allocated to each user. Accordingly, in channel estimation of a specific user, a maximum number of channel taps may be limited to W chips. For example, with reference to Equation (7), if the number of users K is 10, the midamble offset W is 12 chips, and therefore the maximum number of channel taps for channel estimation is 12.

With reference to Figure 3B, a correlation value of the 13th tap may be calculated as a very large value due to a midamble sequence of a different user. As such, the receiver may only calculate correlation values from 0 tap (or chip) to 11 tap (or 11 chip). Thus, if there is a channel path of a specific user in a range beyond 12 chips (i.e., the value of the midamble offset), then channel estimation may not be performed on the channel path.

In accordance with example embodiments of the present invention, a limitation of a maximum number of channel taps of the channel impulse response for channel estimation may be mitigated so that channel estimation may be performed even on a channel path beyond a range of the midamble offset.

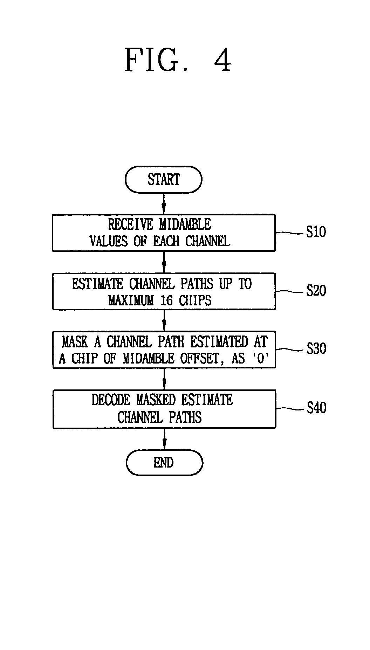

Figure 4 is a flow chart of a channel estimation method in a TD-SCDMA system in accordance with an example embodiment of the present invention. Other embodiments, operations and orders of operations are also within the scope of the present invention.

As shown in Figure 4, when signals are received through channel paths for a specific user (S10), the receiver may calculate (or estimate) correlation values between elements of a midamble sequence allocated to the specific user and the received signal during a guard period (S20). The receiver may further mask a correlation value for a channel path as '0' corresponding to the midamble offset from among the calculated correlation values (S30). The receiver may further decode signals of the estimated channel paths by using the masked correlation values (S40).

More specifically and for example, if a number K of users is 10, then the midamble offset W is 12 chips according to Equation (14). When the receiver receives signals from channels for each user, the receiver may calculate channel impulse responses of channels for each user by using a single cyclic correlator. In a TD-SCDMA system, when the guard period existing between time slots is set as 16 chips, a channel impulse response of the kth user $h^k$ may have 16 channel taps as shown by the following Equation (14) (S10 and S20):

$$h^k = [h_0^k, h_1^k, h_2^k, ..., h_{15}^k] \qquad\qquad \text{Equation (14)}$$

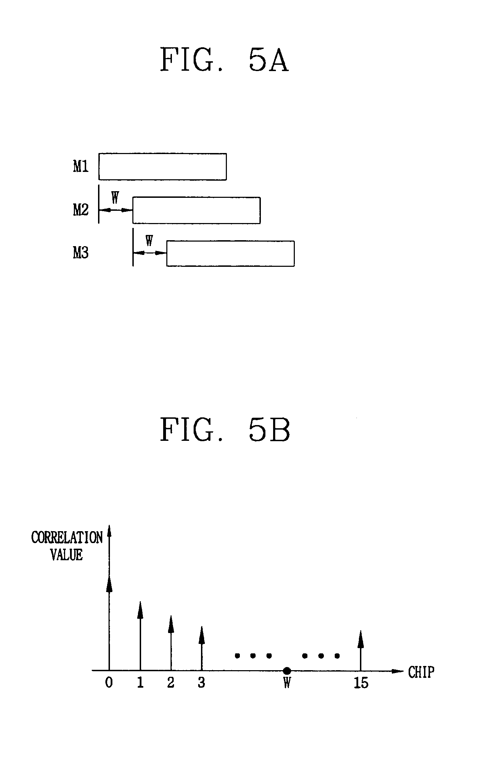

Figure 5A illustrates allocation of a midamble sequence to each user after being shifted by as much as a midamble offset. Figure 5B is a graph showing a channel impulse response having the channel taps as long as a guard period in accordance with an example embodiment of the present invention. Other embodiments and graphs are also within the scope of the present invention.

As shown, the receiver may mask (make a '0') a correlation value corresponding to the midamble offset, i.e., a correlation value of 12 tap (13th tap) (S30). The receiver may estimate a channel path by using the channel impulse response of the masked Kth user $h^k$, and decode signals of the estimated channel path (S40). Accordingly, in example embodiments of the present invention, the channel path that has been delayed further than the range of the midamble offset may be estimated.

A channel estimation method and apparatus in a TD-SCDMA system in accordance with an example embodiment of the present invention may have advantages such that a limitation of a number of channel taps that can be estimated in channel estimation using the single cyclic correlation may be lessened, so that even a channel path going beyond a range of a midamble offset can be estimated. A performance of a receiver may therefore be enhanced.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

**Claims**

1. A channel estimation method comprising:

   estimating channel paths using a midamble sequence;
   masking one of the estimated channel paths; and
   decoding signals transmitted through the estimated channel paths.

2. The method of claim 1, wherein the method is provided in a TD-SCDMA system.

3. The method of claim 1, wherein estimating the channel paths comprises using a single cyclic correlator.

4. The method of claim 1, wherein the estimated channel paths are as long as a guard period.

5. The method of claim 4, wherein the guard period comprises 16 chips.

6. The method of claim 1, wherein the masked channel path corresponds to a midamble offset.

7. The method of claim 6, wherein the midamble offset indicates a maximum integer not more than a value obtained by dividing a number of chips of the midamble sequence by a number of users.

8. The method of claim 7, wherein the midamble sequence comprises a sequence shifted by as much as the midamble offset.

9. The method of claim 8, wherein there is a difference of as much as the midamble offset between midamble sequences allocated to each user.

10. The method of claim 1, wherein the masking makes a correlation value of '0' for the channel path corresponding to the midamble offset.

11. A channel estimation apparatus comprising:

    a first device to estimate channel paths using a midamble sequence; and
    a second device to mask one of the estimated channel paths.

12. The apparatus of claim 10, wherein the apparatus comprises a TD-SCDMA apparatus.

13. The apparatus of claim 11, further comprising:

    a channel decoder to decode signals transmitted through the estimated channel paths.

14. The apparatus of claim 11, wherein the first device estimates the channel path by using a single cyclic correlator.

15. The apparatus of claim 11, wherein the first device estimates paths of the channels that are as long as a guard period.

16. The apparatus of claim 15, wherein the guard period comprises 16 chips.

17. The apparatus at claim 11, wherein the second device masks a path of the channel corresponding to a midamble offset.

**18.** The apparatus of claim 11, wherein the midamble offset indicates a maximum integer not more than a value obtained by dividing a number of chips of the midamble sequence by a number of users.

**19.** A TD-SCMA channel estimation method comprising:

masking one of a plurality of channel paths; and
decoding signals transmitted through the plurality of channel paths including the masked channel path.

**20.** The method of claim 19, further comprising:

estimating channel paths.

**21.** The method of claim 20, wherein estimating channel paths comprises estimating channel paths using a midamble sequence.

**22.** The method of claim 20, wherein estimating the channel paths comprises using a single cyclic correlator.

**23.** The method of claim 20, wherein the estimated channel paths are as long as a guard period.

**24.** The method of claim 19, wherein the masked channel path corresponds to a midamble offset.

**25.** The method of claim 24, wherein the midamble offset indicates a maximum integer not more than a value obtained by dividing a number of chips of a midamble sequence by a number of users.

**26.** The method of claim 25, wherein the midamble sequence comprises a sequence shifted by as much as the midamble offset.

**27.** The method of claim 26, wherein the masking makes a correlation value of '0' for the channel path corresponding to the midamble offset.

# FIG. 1

| DATA<br>(352CHIPS) | MIDAMBLE<br>(144CHIPS) | DATA<br>(352CHIPS) |
|---|---|---|

TIME SLOT

# FIG. 2

# FIG. 3A

# FIG. 3B

# FIG. 4

```
        ┌──────────┐
        │  START   │
        └────┬─────┘
             ↓
┌───────────────────────────────┐
│     RECEIVE MIDAMBLE           │——— S10
│   VALUES OF EACH CHANNEL       │
└───────────────┬───────────────┘
                ↓
┌───────────────────────────────┐
│   ESTIMATE CHANNEL PATHS UP TO │——— S20
│      MAXIMUM 16 CHIPS          │
└───────────────┬───────────────┘
                ↓
┌───────────────────────────────┐
│  MASK A CHANNEL PATH ESTIMATED AT │——— S30
│  A CHIP OF MIDAMBLE OFFSET, AS '0' │
└───────────────┬───────────────┘
                ↓
┌───────────────────────────────┐
│    DECODE MASKED ESTIMATE      │——— S40
│      CHANNEL PATHS             │
└───────────────┬───────────────┘
                ↓
        ┌──────────┐
        │   END    │
        └──────────┘
```

# FIG. 5A

# FIG. 5B

European Patent
Office

**EUROPEAN SEARCH REPORT**

Application Number

EP 04 01 3649

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 251 233 A (LABEDZ GERALD P  ET AL) 5 October 1993 (1993-10-05) * figures 2,4,9 * * column 3, line 1 - line 65 * * column 4, line 39 - line 44 * * column 5, line 8 - line 22 * | 1,11,13, 19-21 | H04L25/02 |
| Y |  | 2-10,12, 14-18, 22-27 | |
| Y | STEINER B ET AL:  "OPTIMUM AND SUBOPTIMUM CHANNEL ESTIMATION FOR THE UPLINK OF CDMA MOBILE RADIO SYSTEMS WITH JOINT DETECTION" EUROPEAN TRANSACTIONS ON TELECOMMUNICATIONS AND RELATED TECHNOLOGIES, AEI, MILANO, IT, vol. 5, no. 1, 1994, pages 39-50, XP000445714 ISSN: 1120-3862 * abstract * * page 40, right-hand column, paragraph 2 - page 44 * * figures 1-4 * | 2,3,10, 12,14,22 | |
| Y | EP 1 300 969 A (HUAWEI TECH CO LTD) 9 April 2003 (2003-04-09) * abstract * * column 1, line 5 - line 11 * * column 2, line 5 - line 45 * * column 3, line 35 - column 8, line 17 * * figures 1-4 * | 6-9,17, 18,24-27 | TECHNICAL FIELDS SEARCHED (Int.Cl.7) H04L |
| Y | DE 199 07 502 A1 (ULRICH THOMAS ; BENZ MICHAEL (DE); KLEIN ANJA (DE); SIEMENS AG (DE)) 31 August 2000 (2000-08-31) * column 1, line 19 - column 2, line 67 * * column 5, line 23 - column 7, line 55 * * figures 2-5 * | 4,5,15, 16,23 | |

-/--

The present search report has been drawn up for all claims

| Place of search | Date of completion of the search | Examiner |
|---|---|---|
| Munich | 23 September 2004 | Marzenke, M |

EPO FORM 1503 03.82 (P04C01)

## EP 1 487 165 A1

**European Patent Office**

**EUROPEAN SEARCH REPORT**

Application Number

EP 04 01 3649

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | JACEK BIALA: "Mobilfunk und Intelligente Netze" VIEWEG VERLAGSGESELLSCHAFT MBH, 1995, page 102, 108, 269, XP002297703 ISBN: 3-528-15302-4 * page 102; figure 4.5b * * page 108, paragraph 3 * * page 269; figure 12.1 * ----- | 1-27 | |

TECHNICAL FIELDS
SEARCHED     (Int.Cl.7)

The present search report has been drawn up for all claims

| Place of search | Date of completion of the search | Examiner |
|---|---|---|
| Munich | 23 September 2004 | Marzenke, M |

EPO FORM 1503 03.82 (P04C01)

## ANNEX TO THE EUROPEAN SEARCH REPORT
## ON EUROPEAN PATENT APPLICATION NO.

EP 04 01 3649

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2004

| Patent document cited in search report | | Publication date | Patent family member(s) | | Publication date |
|---|---|---|---|---|---|
| US 5251233 | A | 05-10-1993 | AU | 657287 B2 | 09-03-1995 |
| | | | AU | 9165491 A | 22-07-1992 |
| | | | BR | 9107237 A | 05-04-1994 |
| | | | CA | 2097694 A1 | 21-06-1992 |
| | | | CN | 1067344 A ,B | 23-12-1992 |
| | | | DE | 69131167 D1 | 27-05-1999 |
| | | | DE | 69131167 T2 | 11-11-1999 |
| | | | EP | 0563300 A1 | 06-10-1993 |
| | | | ES | 2131068 T3 | 16-07-1999 |
| | | | FI | 932823 A | 18-06-1993 |
| | | | IL | 100456 A | 30-03-1995 |
| | | | JP | 6506324 T | 14-07-1994 |
| | | | KR | 9707362 B1 | 07-05-1997 |
| | | | MX | 9102720 A1 | 01-06-1992 |
| | | | NZ | 241128 A | 29-01-1997 |
| | | | NZ | 270872 A | 29-01-1997 |
| | | | WO | 9211708 A1 | 09-07-1992 |
| EP 1300969 | A | 09-04-2003 | CN | 1327312 A | 19-12-2001 |
| | | | AU | 8949801 A | 24-12-2001 |
| | | | EP | 1300969 A1 | 09-04-2003 |
| | | | JP | 2004503985 T | 05-02-2004 |
| | | | US | 2004032849 A1 | 19-02-2004 |
| | | | WO | 0197419 A1 | 20-12-2001 |
| DE 19907502 | A1 | 31-08-2000 | WO | 0051300 A1 | 31-08-2000 |